# EUROPÄISCHE PATENTANMELDUNG

(11) **EP 2 028 497 A2**
(43) Veröffentlichungstag der Anmeldung: **25.02.2009**
(21) Anmeldenummer: 08104551.0
(22) Anmeldetag: 26.06.2008
(51) Int. Cl.: G01P 3/44

(54) **Mit einer Kontaktbahn versehener Radkörper**

(30) Priorität: 20.08.2007 DE 102007039244
(71) Anmelder: ROBERT BOSCH GMBH, 70442 Stuttgart (DE)
(72) Erfinder: Holzer, Thomas, 74889, Sinsheim-Waldangelloch (DE); Saum, Andreas, 77815, Buehl (DE)

(57) **Zusammenfassung**

Bei einem mit einer elektrisch leitenden Kontaktbahn (3) versehenen Radkörper (1) liegt die Kontaktbahn (3) lediglich in einem sektoriellen, zu kontaktierenden Bereich (2) frei und ist ansonsten in den Radkörper (1) isolierend eingebettet.

## Beschreibung

Die Erfindung betrifft einen mit einer Kontaktbahn versehenen Radkörper gemäß dem Oberbegriff des Anspruches 1.

### Stand der Technik

Radkörper in Form von Scheiben, wie Riemenscheiben oder Zahnrädern, mit einer zugeordneten Markierung werden in Verbindung mit unterschiedlichsten Messeinrichtungen zur Erfassung unter anderem der Drehzahl und/oder Drehlage von Motoren und Aggregaten verwendet.

Weiter sind Radkörper in Form von Zahnrädern aus elektrisch nicht leitendem Material, insbesondere Kunststoff, bekannt, die flankenseitig liegende Kontaktscheiben aus elektrisch leitendem Material tragen, welche im Beaufschlagungsbereich von als Kontaktschleifern ausgebildeten Kontaktelementen diesen als Kontaktbahnen zugehörig sind. Die flankenseitig am Radkörper vorgesehene Kontaktscheibe ist mit zur Scheibenebene quer ausgestellten Laschen versehen, über die, in Bohrungen des Radkörpers eingesetzt, die Kontaktscheibe anliegend zum Radkörper festgelegt ist, wobei die Kontaktscheibe zur Festlegung eines Kontaktwinkels ausgespart ist.

Die Befestigung der Kontaktscheibe zum Radkörper ist ebenso wie deren Herstellung in einem Stanz-Biege-Prozess verhältnismäßig aufwändig. Ferner bedingt die zum Radkörper aufgesetzte Anordnung der Kontaktscheibe stufige Übergänge in der Ablaufbahn der Kontaktelemente.

Offenbarung der Erfindung

Der Erfindung liegt die Aufgabe zugrunde, den Radkörper mit zugehöriger Kontaktbahn für die Kontaktelemente zu einer unter Fertigungs- und Funktionsgesichtspunkten vorteilhaften Einheit auszubilden.

Gemäß der Erfindung wird dies mit den Merkmalen des Anspruches 1 erreicht, denen zufolge die Kontaktbahn in den Radkörper isolierend eingebettet ist und lediglich im durch das Kontaktelement zu kontaktierenden Bereich frei liegt.

Bei einer solchen in den Radkörper integrierten Anordnung der elektrisch leitenden Kontaktbahn erübrigt sich eine besondere Befestigung derselben gegenüber dem Radkörper und es ergeben sich zudem hinsichtlich der konstruktiven Gestaltung, der Formgebung wie auch des Verlaufs der Kontaktbahn weitgehende Möglichkeiten, auch hinsichtlich der Ausbildung und Anordnung des durch das Kontaktelement oder durch die Kontaktelemente zu kontaktierenden, frei liegenden Bereiches. Insbesondere kann der Übergang auf den durch das Kontaktelement zu kontaktierenden, frei liegenden Bereich auch im Hinblick auf eine möglichst ebene, von stufigen Absätzen freie Ablaufbahn für das Kontaktelement gestaltet werden, und dies auch bei Kontaktbahnen, die konstruktiv als Streifen oder Drähte ausgebildet oder auch nur durch eine entsprechend leitende Auflage zu einem aus isolierendem Material, insbesondere Kunststoff, bestehenden Radkörper gebildet sind.

Insbesondere lässt sich die erfindungsgemäße Lösung ohne Nachteile hinsichtlich Festigkeit und Verschleiß auch mit Kontaktbahnen realisieren, die sich nicht wesentlich über ihrem durch das Kontaktelement zu kontaktierenden Bereich hinaus erstrecken und somit beispielsweise lediglich Bestandteile verhältnismäßig kleinen Kontaktscheiben sind, die randseitig bevorzugt umschließend zur Kontaktbahn in den Radkörper eingebettet sind. Bei einer derartigen Lösung kann die Kontaktbahn aufgrund der zu ihrer Kontaktfläche rückseitigen Abstützung gegen den Radkörper auch sehr dünnwandig gestaltet sein, ohne dass Schäden zu befürchten sind.

Daneben bildet eine erfindungsgemäße Ausgestaltung auch die Möglichkeit, die in den Radkörper isolierend eingebettete Kontaktbahn in ihrem durch das Kontaktelement zu kontaktierenden Bereich nach Art einer Spannbrücke zwischen längs der Bahn beabstandeten Abstützungen zum Radkörper berührungsfrei zu führen, so dass die Kontaktbahn zumindest über einen Teil ihres zu kontaktierenden Bereiches federnd nachgiebig ist.

Ungeachtet dessen, ob die Kontaktbahn als Ringbahn umschließend zur Achse des Radkörpers gestaltet ist oder sich lediglich über einen sektoriellen Abschnitt des Radkörpers erstreckt und Bestandteil einer randseitig entsprechend in den Radkörper eingebetteten Kontaktscheibe ist, erweist es sich als zweckmäßig, einen zur Ablaufbahn des Kontaktelementes oder der Kontaktelemente möglichst ebenengleichen Verlauf des durch das Kontaktelement zu kontaktierenden Bereiches der Kontaktbahn zu erreichen, wobei etwaige Sprünge im Verlauf der Ablaufbahn zum zu kontaktierenden Bereich bevorzugt verlaufend ausgeglichen werden.

Außerhalb des durch das Kontaktelement zu kontaktierenden, frei liegenden Bereiches ist die Ablaufbahn für das Kontaktelement oder die Kontaktelemente zweckmäßigerweise als eine elektrisch nicht leitende Gleitfläche ausgebildet, zwischen der und dem jeweiligen Kontaktelement sich eine möglichst geringe Reibung ergibt. Diese Gleitfläche kann durch eine seitliche Wandfläche des Radkörpers gebildet sein, in den die Kontaktbahn eingebettet ist, oder auch durch die Deckfläche einer Abdeckschicht, über die die Kontaktbahn außerhalb des durch das Kontaktelement zu kontaktierenden, frei liegenden Bereiches überdeckt ist. Eine solche Abdeckschicht lässt sich insbesondere im Hinblick auf einen geringen Reibwiderstand zum jeweiligen Kontaktelement gestalten, insbesondere aber auch im Hinblick auf etwaige verlaufend auslaufende Übergänge zum frei liegenden, zu kontaktierenden Bereich der Kontaktbahn hinsichtlich der Materialbeschaffenheit auswählen. Ein derartiger Aufbau des Radkörpers bietet auch eine gute Voraussetzung dafür, über die Formgebung des Radkörpers den Verlauf der Kontaktbahn unmittelbar vorzugeben und die Kontaktbahn beispielsweise aufzudampfen und/oder aufzusprühen.

Im Rahmen der Erfindung liegt es ferner, den zu kontaktierenden Bereich der Kontaktbahn radial in Sektoren zu unterteilen. Diese können unterschiedlich große Zentriwinkel aufweisen und es kann diesen Sektoren jeweils ein Kontaktelement zugeordnet werden. Aufgrund der Unterteilung in Sektoren mit unterschiedlich großen Zentriwinkeln bietet sich in einfacher Weise die Möglichkeit, über die Kontaktbahn zeitlich versetzt Kontakte auszulösen. Ein zu- und ablaufseitig gleicher Zeitversatz lässt sich dadurch erreichen, dass die Sektoren symmetrisch zu einer gemeinsamen Winkelhalbierenden angeordnet sind.

Eine zweckmäßige Anwendung der Erfindung ist bei Motoren, insbesondere elektrischen Motoren, mit nachgeordnetem, insbesondere integriertem Getriebe gegeben, wie sie zum Beispiel im Einsatz bei Front- und Heckscheiben-Reinigungssystemen sind, und bei denen der Motor mithilfe der Kurzschlussbremse automatisch in der Parkstellung angehalten wird, falls der Fahrer über den Wischensschalter den Wischbetrieb beendet.

Die bei der erfindungsgemäßen Lösung zu realisierende Rampengeometrie im Übergang von der Ablaufbahn auf den durch das Kontaktelement zu kontaktierenden, frei liegenden Bereich reduziert den Verschleiß zwischen Kontaktbahn und Kontaktelement und führt zu einer minimierten Geräuschentwicklung. Ferner bedingt die erfindungsgemäße Lösung auch keinen Eingriff in den Radkörper, wie er bei Befestigung von Kontaktscheiben über Befestigungsbohrungen gegeben ist, und trägt dadurch zur Verbesserung der mechanischen Festigkeit des Radkörpers bei.

Schließlich kann auch die Kontaktbahn als solche vereinfacht ausgebildet und in ihrer Herstellung vereinfacht werden. Damit ergibt sich eine preisgünstige Lösung, die sich zudem durch geringen Verschleiß und ruhiges Arbeiten auszeichnet.

Weitere Vorteile und zweckmäßige Ausführungen ergeben sich aus den Ansprüchen, der Figurenbeschreibung und den Zeichnungen. Es zeigen:
- Fig. 1: in einer Schnittführung I-I in Fig. 2 ein mit einer elektrisch leitenden Kontaktbahn versehener Radkörper, insbesondere in der Gestaltung als Abtriebsrad eines Scheibenwischerantriebes,
- Fig. 2: eine Draufsicht auf das Abtriebsrad gemäß Fig. 1 in Richtung des Pfeiles II, und
- Fig. 3: einen Schnitt durch das Abtriebsrad gemäß Fig. 2 entsprechend einer Schnittführung III-III in Fig. 2.

In den Zeichnungen ist in schematisierter Darstellung ein Radkörper 1 gezeigt. Ein solcher Radkörper 1 findet in konkreter Ausgestaltung beispielsweise als Abtriebsrad eines Getriebes Verwendung, das integriert zu einem Elektromotor im Antrieb für Front- und/oder Heckscheibenreinigungssysteme vorgesehen ist, deren Scheibenwischer meist in mehreren Geschwindigkeitsstufen anzutreiben sowie in einer Parkstellung abzulegen sind. Diese bedingt als definiert vorgegebene Stellung antriebsseitig eine Positionserkennung, um die Parkstellung ausgehend vom jeweiligen Wischbetrieb anzufahren und die Wischer einlaufend in die Parkstellung beim Erreichen der Parkstellung beispielsweise durch eine entsprechende Kurzschlussschaltung abzubremsen.

Der Radkörper 1 hat in der vorgeschilderten beispielsweisen Verwendung also eine Funktion als Abtriebsrad, und ist hierzu beispielsweise umfangsseitig entsprechend verzahnt, sowie als Kontaktscheibe für die positionsgerechte Ansteuerung des Antriebes des Wischersystems.

Im Hinblick auf die letztgenannte Funktion weist der Radkörper 1 einen zu kontaktierenden Bereich für wenigstens ein Kontaktelement auf, bezogen auf das Ausführungsbeispiel für zwei Kontaktelemente, die nicht gezeigt sind.

Der zu kontaktierende Bereich 2 ist Bestandteil einer elektrisch leitenden Kontaktbahn 3, die in der Darstellung als ringförmiger Scheibenkörper einer Flanke 4 des Radkörpers 1 zugeordnet ist und die Drehachse 5 des Radkörpers 1 umschließt, der im Ausführungsbeispiel bezogen auf die vorgesehene Anwendung über eine Welle 6 angetrieben und getragen ist. Die getriebe- und/oder motorseitige Lagerung der Welle 6 ist nicht gezeigt.

In der bevorzugten erfindungsgemäßen Ausgestaltung ist die Kontaktbahn 3 in der Flanke 4 versenkt angeordnet und liegt quasi in einem ringförmigen Graben der Flanke 4 des Radkörpers 1, der in Anbetracht der Herstellung des Radkörpers aus elektrisch nicht leitendem Werkstoff eine isolierende Aufnahme für die Kontaktbahn 3 bildet.

Die Verwendung von elektrisch nicht leitendem Werkstoff, wie beispielsweise Kunststoff, für den Radkörper 1 macht es möglich, dass der Radkörper 1 außerhalb des kontaktierenden Bereiches unmittelbar sowohl die isolierende Aufnahme für die Kontaktbahn 3 wie auch deren Überdeckung 7 bildet, so dass die elektrisch leitende Kontaktbahn unmittelbar an den Radkörper 1 eingebettet und von dem oder den für diesen verwendeten Werkstoffen isolierend umschlossen ist.

Damit wird ersichtlich, dass der Radkörper 1 als Kunststoffkörper in einfacher Weise auch aus mehreren Materialien, insbesondere als Spritzteil herzustellen ist, wobei über die Materialwahl zum Beispiel einerseits Festigkeitsgesichtspunkten für den Grundkörper 8 mit dem verzahnten Umfangsbereich und andererseits Anforderungen an die Isolierung und die Gleitfähigkeit Rechnung getragen werden kann, wie sie im Hinblick darauf zweckmäßig sind, dass der flankenseitig zur Kontaktbahn 3 überdeckende Bereich die Ablaufbahn für insbesondere als Kontaktschleifer ausgebildete Kontaktelemente bildet.

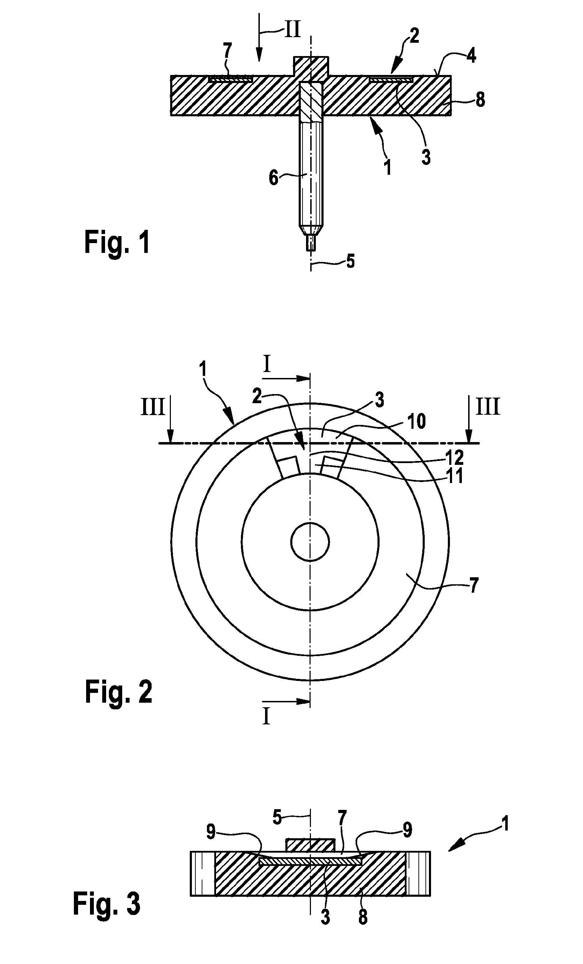

Entsprechend der außerhalb des zu kontaktierenden Bereiches 2 der Kontaktbahn 3 gegebenen isolierenden Überdeckung 7 zur Kontaktbahn 3 ergibt sich zum zu kontaktierenden, frei liegenden Bereich 2 der Kontaktbahn 3 grundsätzlich zu- und ablaufseitig ein absätziger Übergang 9, wie dies in Fig. 3 veranschaulicht ist, wobei dieser Übergang 9 bevorzugt rampenförmig gestaltet ist, so dass die nicht dargestellten Kontaktelemente gleitend von der Überdeckung 7 als Gleitbahn auf den frei liegenden Bereich 2 der Kontaktbahn 3 auflaufen können.

Im Hinblick darauf kann es auch zweckmäßig sein, die Kontaktbahn 3 im zu kontaktierenden Bereich 2 auszuwölben oder auszubauchen, um die Höhe des zu überbrückenden Absatzes zu minimieren.

Die Kontaktbahn 3 ist im Rahmen der Erfindung bevorzugt durch eine Ringscheibe aus elektrisch leitendem Material gebildet, die in den Radkörper 1 über den größeren Teil ihres Umfanges eingebettet ist. Es liegt im Rahmen der Erfindung aber auch eine Ausgestaltung, bei die Kontaktbahn 3 durch anderweitig gestaltete Leiterbahnen gebildet ist, die gegebenenfalls auch gegeneinander isoliert und über eine Leiterbrücke verbunden sind. Ferner liegt es im Rahmen der Erfindung, die Kontaktbahn 3 im Rahmen der Herstellung des Radkörpers als Leiterbahn aufzutragen, beispielsweise aufzuspritzen und danach mit der Überdeckung zu versehen, so dass sich wiederum eine eingebettete Lage ergibt, die lediglich im zu kontaktierenden Bereich 2 frei liegt.

Der zu kontaktierende Bereich 2 stellt sich im Rahmen der Erfindung als sektorieller Ausschnitt zum Radkörper 1 im Bereich der Kontaktbahn 3 dar, und es ist dieser sektorielle Ausschnitt, der dem zu kontaktierenden Bereich 2 entspricht, radial in Sektoren mit unterschiedlich großen Zentriwinkeln unterteilt, wobei der radial äußere Ausschnittssektor mit 10 und der radial innere Ausschnittssektor mit 11 bezeichnet ist. Bezogen auf den jeweiligen Zentriwinkel überdeckt der radial äußere Ausschnittsabschnitt 10 einen größeren Winkelbereich als der radial innere Ausschnittssektor, wobei beide Ausschnittssektoren 10, 11 symmetrisch zu einer gemeinsamen Winkelhalbierenden liegen, die mit 12 angedeutet ist. Durch die Festlegung der Sektoren 10 und 11 mit unterschiedlich großen Zentriwinkeln ist bezogen auf jeweilige, in ihrer Lage zueinander festgelegte Kontaktelemente beim Umlauf des Radkörpers 1 eine zeitlich versetzte Kontaktierung des dem jeweiligen Sektor 10 bzw. 11 zugehörigen Bereiches der Kontaktbahn 3 im zu kontaktierenden Bereich 2 möglich.

Ist lediglich eine kontaktierende Verbindung der auf den zu kontaktierenden Bereich 2 zugreifenden Kontaktelemente, insbesondere in Form von Schleifkörpern gewollt, so liegt es im Rahmen der Erfindung, die elektrisch leitende Kontaktbahn 3 im Wesentlichen auf den zu kontaktierenden Bereich zu beschränken, so beispielsweise als eine scheibenförmige Einlage auszubilden, die randseitig in den Radkörper 1 eingebettet und dadurch im vorgesehenen Bereich des Radkörpers 1 fixiert ist, wobei es insbesondere in einem derartigen Fall zweckmäßig ist, dass die Gleitbahn für das oder die Kontaktelemente unmittelbar von dem elektrisch nicht leitenden Material gebildet ist, aus dem der Radkörper 1 hergestellt ist.

## Patentansprüche

1. Mit einer elektrisch leitenden Kontaktbahn versehener Radkörper (1) für zumindest ein Kontaktelement und einem über das Kontaktelement elektrisch zu kontaktierenden Bereich (2) der Kontaktbahn (3),
**dadurch gekennzeichnet, dass** die Kontaktbahn (3) in den Radkörper (1) isolierend eingebettet ist und lediglich im durch das Kontaktelement zu kontaktierenden Bereich (2) frei liegt.

2. Radkörper nach Anspruch 2,
**dadurch gekennzeichnet, dass** die Kontaktbahn (3) einer Flanke (4) des Radkörpers (1) zugeordnet ist.

3. Radkörper nach Anspruch 1 oder 2,
**dadurch gekennzeichnet, dass** der zu kontaktierende Bereich (2) der Kontaktbahn (3) sich über einen sektoriellen Abschnitt des Radkörpers (1) erstreckt.

4. Radkörper nach einem der Ansprüche 1 bis 3,
**dadurch gekennzeichnet, dass** die Kontaktbahn (3) als zur Achse (5) des Radkörpers (1) ringförmige Bahn ausgebildet ist.

5. Radkörper nach Anspruch 4,
**dadurch gekennzeichnet, dass** die Kontaktbahn (3) sich lediglich über einen sektoriellen Abschnitt des Radkörpers (1) erstreckt.

6. Radkörper nach Anspruch 4 oder 5,
**dadurch gekennzeichnet, dass** der Radkörper (1) außerhalb des zu kontaktierenden Bereiches (2) der Kontaktbahn (3) eine elektrisch nicht leitende Gleitfläche für das zumindest eine Kontaktelement aufweist.

7. Radkörper nach Anspruch 6,
**dadurch gekennzeichnet, dass** die Gleitfläche des Radkörpers (1) zumindest im Übergangsbereich auf den zu kontaktierenden Bereich (2) der Kontaktbahn (3) zu diesem ebenengleich verläuft.

8. Radkörper nach einem der Ansprüche 1 bis 6,
**dadurch gekennzeichnet, dass** die Gleitfläche des Radkörpers (1) zum zu kontaktierenden Bereich (2) der Kontaktbahn (3) axial abgesetzt und erhaben liegt.

9. Radkörper nach Anspruch 8,
**dadurch gekennzeichnet, dass** der Übergang von der Gleitfläche des Radkörpers (1) auf den zu kontaktierenden Bereich (2) der Kontaktbahn (3) verlaufend ausgebildet ist.

10. Radkörper nach einem der Ansprüche 2 bis 9,
**dadurch gekennzeichnet, dass** der zu kontaktierende Bereich (2) der Kontaktbahn (3) radial in Sektoren (10, 11) mit unterschiedlich großen Zentriwinkeln unterteilt ist, denen jeweils ein Kontaktelement zugeordnet ist.

11. Radkörper nach Anspruch 10,
**dadurch gekennzeichnet, dass** zumindest zwei Sektoren (10, 11) unterschiedlich großen Zentriwinkels vorgesehen ist, von denen der radial innere Sektor (11) einen kleineren Zentriwinkel als der radial äußere Sektor (10) aufweist.

12. Radkörper nach Anspruch 10 oder 11,
**dadurch gekennzeichnet, dass** die Sektoren (10, 11) symmetrisch zu einer gemeinsamen Winkelhalbierenden (12) liegen.
